# EUROPEAN PATENT APPLICATION

(11) **EP 4 020 047 A1**
(43) Date of publication of application: **29.06.2022**
(21) Application number: 21213313.6
(22) Date of filing: 09.12.2021
(51) Int. Cl.: G02B 6/44, H01B 11/22, H01B 9/00

(54) **PHOTOELECTRIC FAST-CONNECTION OPTICAL CABLE FOR 5G OUTDOOR MICRO BASE STATION AND METHOD USING THE SAME**

(30) Priority: 24.12.2020 CN 202011550677
(71) Applicant: Hengtong Optic-Electric Co., Ltd, Suzhou, Jiangsu 215234 (CN)
(72) Inventor: LIN, Weifeng, Jiangsu, 215234 (CN); WANG, Yuliang, Jiangsu, 215234 (CN); GAO, Feng, Jiangsu, 215234 (CN); CHEN, Danyu, Jiangsu, 215234 (CN); SHI, Yucheng, Jiangsu, 215234 (CN); CHEN, Xinjue, Jiangsu, 215234 (CN); NIE, Taotao, Jiangsu, 215234 (CN); CUI, Zhongmin, Jiangsu, 215234 (CN)
(74) Representative: Noréns Patentbyrå AB

(57) **Abstract**

Provided is a photoelectric fast-connection optical cable for a 5G outdoor micro base station, which enables a radius of the cable to be reduced, enables a construction cost of the micro base station to be reduced, and enables a subsequent branch connection to be quick and convenient. The optical cable includes a cable core area formed by twisting three optical units, a central sleeve is arranged around the cable core area, three sets of electric units are arranged around the central sleeve, each set of electric units includes three electric units, the nine electric units are twisted around the central sleeve, and a sheath layer is coated around the electric units.

## Description

### TECHNICAL FIELD

The present invention relates to the technical field of optical cable structure, and more particularly, to a photoelectric fast-connection optical cable for a 5G outdoor micro base station.

### BACKGROUND

In the 4G era, macro base stations are mostly used, which are generally deployed on communication towers and have the disadvantages of high site rental cost, high construction cost, high power consumption and space occupation. In the 5G era, since 5G millimeter waves in the air has large attenuation, poor diffraction ability and poor wave penetrating power, the coverage of 5G high-band signals is greatly reduced, and the network density is significantly increased. When the macro base stations are laid on a large scale according to the mode in the 4G era, both network construction cost and operation and maintenance cost will be greatly increased. Considering the utilization of communication resources and environmental protection, a better solution is needed.

Base stations may be divided into macro base stations, micro base stations, pico base stations and femto base stations according to the coverage radius, wherein the macro base stations have a coverage radius of more than 200 meters, reaches more than 2 km at 2G/3G, and has transmission power of tens of watts. The macro base stations have a large coverage radius, and generally cover a wide area in a large scale. The coverage of the micro base stations ranges from 50 m to 200 m, and the micro base stations are deployed in a hot spot for deep coverage, so as to solve blindness and signal weakness of the macro base stations. Micro base station products are characterized by light weight, low power consumption and easy deployment, so that operators can obtain investment incomes of base station devices on a premise of effectively controlling the costs.

The construction of 5G base stations is planned and deployed by macro-micro cooperation in a principle of wide-area coverage of macro base stations and deep coverage of micro base stations. Low-power micro base stations are densely deployed in hot spots, which means that ultra-dense networking of the micro base stations is implemented to meet demands of 1,000 times increase in mobile data traffic and 10 times to 100 times increase in user experience rate in the future. Compared with the era of 1G/2G/3G/4G dominated by the macro base stations, the micro base stations keep pace with the macro base stations in the 5G era, and the number of the deployed micro base stations will be explosively increased.

Existing optical cables are generally suitable for the construction of macro base stations, with large outer diameters and complicated structures, which will increase the layout cost of micro base stations.

### SUMMARY

In view of the above problems, a first aspect of the present invention provides a photoelectric fast-connection optical cable for a 5G outdoor micro base station, which enables a radius of the cable to be reduced, enables a construction cost of the micro base station to be reduced, and enables a subsequent branch connection to be quick and convenient.

Moreover, a second aspect of the present invention further provides a method of using the photoelectric fast-connection optical cable for a 5G outdoor micro base station.

The photoelectric fast-connection optical cable for the 5G outdoor micro base station according to the first aspect of the present invention includes:
a cable core, including:
   three optical units, which are twisted together;
a central sleeve arranged around the cable core,
three sets of electric units, wherein each set of electric units include three electric units, and the electric units are twisted around the central sleeve; and
a sheath layer coated around the electric units.

The photoelectric fast-connection optical cable for the 5G outdoor micro base station according to the first aspect of the present invention further includes a central reinforcer arranged at a central position of the three twisted optical units, so as to ensure strength of the entire structure.

In the photoelectric fast-connection optical cable for the 5G outdoor micro base station according to the first aspect of the present invention, a four-core structure is arranged in a center of each of the optical units, so that one set is reserved while a single unit can meet the use of the existing device.

In the photoelectric fast-connection optical cable for the 5G outdoor micro base station according to the first aspect of the present invention, each of the optical units includes:
four colored optical fibers;
a dry water-blocking yarn coated outside the colored optical fiber;
a polybutylene terephthalate layer arranged around the dry water-blocking yarn;
an aramid fiber yarn arranged around the polybutylene terephthalate layer; and
a low-smoke zero-halogen flame-retardant outer sheath arranged around the aramid fiber yarn.

In the photoelectric fast-connection optical cable for the 5G outdoor micro base station according to the first aspect of the present invention, a specification of a corresponding grade of 1.5 mm2 to 2.5 mm2 is employed for each of the electric units according to a use power and a user distance of a device, so that the whole optical cable meets the performance requirements of light weight, small volume, tensile, flame retardant, ultraviolet resistance and the like.

In the photoelectric fast-connection optical cable for the 5G outdoor micro base station according to the first aspect of the present invention, each set of electric units includes a live wire electric unit, a neutral wire electric unit and a ground wire electric unit sequentially arranged, wherein, when laid in branches, and each set of electric units are arranged corresponding to one of the optical units.

The method of using the photoelectric fast-connection optical cable for the 5G outdoor micro base station according to the second aspect of the present invention is provided, the optical cable including a body with an outer diameter smaller than 20 mm. The method includes:
dividing the optical cable into three optical units and three sets of electric units through a primary branching device;
connecting the electric units to a special plug for power supply of an Active Antenna Unit, AAU, device through an insulated polyvinyl chloride hollow pipe for an insulated conductor part of the electric units; and
connecting the optical units to the AAU device through two pairs of duplex connectors formed by secondary branching using a spiral armored pipe for the optical units.

In the application method of the photoelectric fast-connection optical cable for the 5G outdoor micro base station according to the second aspect of the present invention, each of the duplex connectors has an outer diameter of 7.0 mm to 7.5 mm, which is convenient for fixing with the device.

In the application method of the photoelectric fast-connection optical cable for the 5G outdoor micro base station according to the second aspect of the present invention, a voltage protection apparatus is arranged between the electric units and the AAU device. In addition, according to a function of the AAU device, the electric units may also be directly connected to the AAU device.

In the application method of the photoelectric fast-connection optical cable for the 5G outdoor micro base station according to the second aspect of the present invention, due to a complex outdoor use ambient of the optical cable, a temperature-resistant ambient temperature of an accessory assembly of the optical cable is between -40°C and 70°C; and a protection grade of the accessory assembly of the optical cable meets IP67. In addition, a material of the sheath is required to meet the following requirements: a temperature-resistant ambient temperature is required to be between -40°C and 70°C, and the material is required to have excellent wear resistance and mechanical and physical properties.

In the design process, an outer diameter and a length of the primary branching device are reduced as much as possible, which avoids the phenomenon that the primary branching device cannot pass smoothly at a turning point. Two DLC/UPC duplex connectors are directly output from a connected portion between a branch cable of the optical unit and the AAU, wherein one duplex connector is for use and the duplex connector is for standby.

In the process of processing, it is necessary to control the surplus length of each procedure to ensure the quality stability of the optical cable; and matching degrees and performances between assemblies in the machining process of the optical cable assemblies need to be effectively controlled.

In the present invention, the optical cable used for outdoor micro base station connection is simple in structure, light in weight, convenient and rapid in construction, greatly reducing the construction period and construction cost, and providing a brand-new solution for full coverage of 5G network; optoelectronic separation is adopted in the photoelectrical hybrid cable to reasonably arrange a plurality of optical units and electrical units; and the branching device is specially designed according to the requirements of the use environment to meet the use requirements of the 5G micro base station, which enables the radius of the cable to be reduced, enables the construction cost of the micro base station to be reduced, and enables the subsequent branch connection to be quick and convenient.

### BRIEF DESCRIPTION OF THE DRAWINGS

FIG. 1 is a schematic cross-sectional view of an optical cable according to the present invention;
FIG. 2 is a schematic diagram of connection for connecting with a micro base station according to the present invention; and
FIG. 3 is a flowchart of a manufacturing process of the optical cable according to the present invention.

The names corresponding to the reference numerals in the figures are as follows:
1 refers to optical unit, 2 refers to central sleeve, 3 refers to electric unit, 4 refers to sheath layer, 5 refers to central reinforcer, 6 refers to primary branching device, 7 refers to duplex connector, and 100 refers to electric hybrid cable.

### DETAILED DESCRIPTION

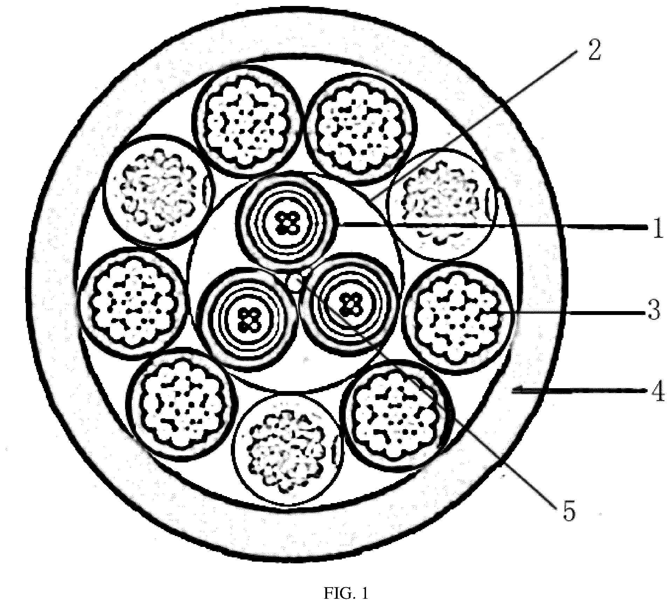

A photoelectric fast-connection optical cable for a 5G outdoor micro base station, as shown in FIG. 1, includes a cable core area formed by twisting three optical units 1. A central sleeve 2 is arranged around the cable core area, three sets of electric units are arranged around the central sleeve 2, each set of electric units includes three electric units 3, the nine electric units 3 are twisted around the central sleeve 2, and a sheath layer 4 is coated around the electric unit 3.

A central reinforcer 5 is arranged at a central position on which the three optical units 1 are twisted, so as to ensure a strength of the entire structure.

A four-core structure is arranged in a center of each optical unit 1, so that one set is reserved while a single unit can meet the use of the existing device.

Each optical unit 1 includes four colored optical fibers, a dry water-blocking yarn, a polybutylene terephthalate layer, an aramid fiber yarn and a low-smoke zero-halogen flame-retardant outer sheath.

A specification of a corresponding grade of 1.5 mm² to 2.5 mm² is employed for the electric unit according to a use power and a user distance of a device, and the whole hybrid cable meets the performance requirements of light weight, small volume, tensile, flame retardant, ultraviolet resistance and the like for road poles.

Each set of electric units includes a live wire electric unit, a neutral wire electric unit and a ground wire electric unit sequentially distributed. When laid in branches, each set of electric units is arranged corresponding to one independent optical unit 1.

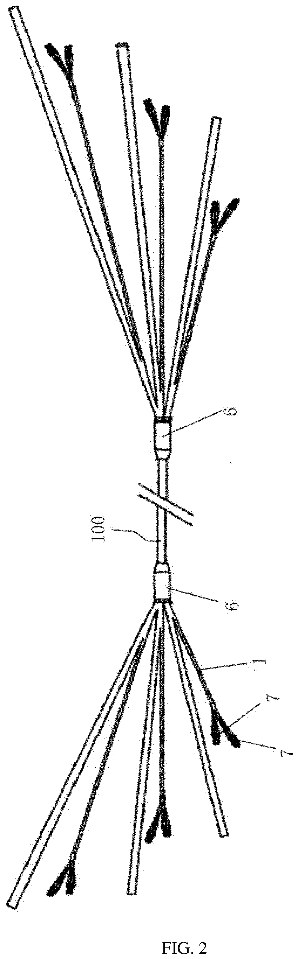

A method of using a photoelectric fast-connection optical cable for a 5G outdoor micro base station is shown in FIG. 2. A branching type structure is employed for the optical cable to design a 12-core 9-electric hybrid cable 100, and an outer diameter of a body of the cable meets the requirement of less than 20 mm. In the design process, an outer diameter and a length of a primary branching device 6 are reduced as much as possible, which avoids the phenomenon that the primary branching device 6 cannot pass smoothly at a turning point. A secondary branching device is used for interconnection between 5G micro base station devices. Three optical units and three sets of electrical units are arranged passing through the primary branching device. An insulated conductor part of the electrical unit, which is provided with an insulated polyvinyl chloride hollow pipe, is connected with a special plug for power supply of an AAU device. Each optical unit is additionally provided with a spiral armored pipe for secondary branching into two pairs of duplex connectors 7 which are connected to the device. An outer diameter of the secondary branching device is controlled to be 7.0 mm to 7.5 mm, which is convenient for fixing with the device.

Two DLC/UPC duplex connectors 7 are directly output from a connected portion between a branch cable of the optical unit 1 and the AAU, wherein one duplex connector is for use and the duplex connector 7 is for standby. The electrical unit 3 is directly terminated or a voltage protection device is additionally arranged in the middle of the termination according to a function of the AAU device.

Due to a complex outdoor use ambient of the optical cable, a material of the sheath layer 4 has to meet the following requirements that: a temperature-resistant ambient temperature is required to be between -40°C and 70°C, and the material is required to have excellent wear resistance and mechanical and physical properties; and a temperature-resistant ambient temperature of an accessory assembly of the optical cable is between -40°C and 70°C; and a protection grade of the assembly meets IP67.

In the process of processing, it is necessary to control the surplus length of each procedure to ensure the quality stability of the optical cable; and matching degrees and performances between assemblies in the machining process of the optical cable assemblies need to be effectively controlled.

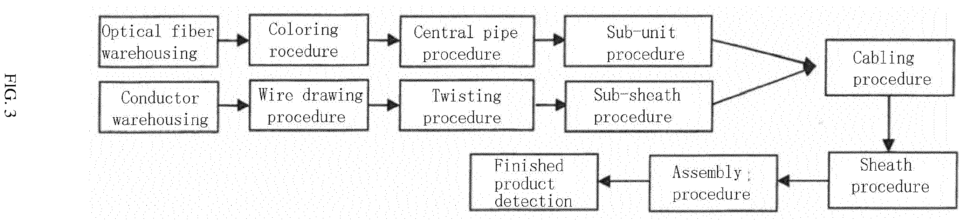

A manufacturing process of a photoelectric fast-connection optical cable for a 5G outdoor micro base station, as shown in FIG. 3, includes optical unit manufacturing and electrical unit manufacturing. During optical unit manufacturing, an optical fiber is warehoused and then colored, and then a central pipe procedure and a subunit procedure are carried out to complete the optical unit manufacturing. During electrical unit manufacturing, a conductor is warehoused, a wire drawing procedure is carried out, then a twisting procedure is carried out, and then a sub-sheath procedure is carried out to complete the electrical unit manufacturing. After that, three sets of optical units and nine sets of electrical units are arranged into a cable according to the structure to carry out a cabling procedure, then a sheath process is carried out, then an assembly manufacturing procedure is carried out at both ends of the optical cable respectively, and finally the finished product is detected.

The optical cable used for outdoor micro base station connection is simple in structure, light in weight, convenient and rapid in construction, greatly reducing the construction period and construction cost, and providing a brand-new solution for full coverage of 5G network; optoelectronic separation is adopted in the photoelectrical hybrid cable to reasonably arrange a plurality of optical units and electrical units; and the branching device is specially designed according to the requirements of the use environment to meet the use requirements of the 5G micro base station, which enables the radius of the cable to be reduced, enables the construction cost of the micro base station to be reduced, and enables the subsequent branch connection to be quick and convenient.

The use environment requirements of the photoelectric hybrid cable and the accessory assemblies thereof range from -40°C to 85°C. Through UL1581 anti-UV test, the tensile performance of the optical cable can reach 6,000 N; and the flattening performance of the optical cable can reach 7,500 N/100 mm.

The photoelectrical hybrid cable and the accessory assemblies thereof can meet the communication needs of the three major operators and the government. The specifications of the electric units can meet the needs of devices with a power of 1,500 W and a voltage of 54 V, and the optical unit has four cores, which can meet the need that one set is reserved while a single unit meets the use of the existing device. A mode of separating the main cable and the branch cables is employed for the photoelectrical hybrid cable and the accessory assemblies thereof. The branch cable is factory-prefabricated according to a service length, which is convenient for connection. The main cable is cut and terminated according to the use of the construction site, with high construction efficiency.

It is apparent to those skilled in the art that the present invention is not limited to the details of the above-mentioned exemplary embodiments, and can be implemented in other specific forms without departing from the gist or basic features of the present invention. Therefore, the embodiments should be regarded as exemplary and non-limiting from any point of view, and the scope of the present invention is defined by the appended claims instead of the above description, so it is intended to embrace all changes falling within the meaning and scope of equivalent elements of the claims. Any reference numeral in the claims shall not be construed as limiting the claims.

In addition, it should be understood that although this specification is described according to the embodiments, each embodiment does not contain only one independent technical solution. The narration mode of this specification is only for purpose of clarifying, and those skilled in the art should take this specification as a whole. The technical solutions in each embodiment may also be combined appropriately to form other embodiments that may be understood by those skilled in the art.

## Claims

1. A photoelectric fast-connection optical cable for a 5G outdoor micro base station, comprising:
a cable core, comprising:
three optical units (1), which are twisted together;
a central sleeve (2) arranged around the cable core,
three sets of electric units (3), wherein each set of electric units (3) comprise three electric units (3), and the electric units (3) are twisted around the central sleeve (2); and
a sheath layer (4) coated around the electric units (3).

2. The photoelectric fast-connection optical cable for the 5G outdoor micro base station according to claim 1, further comprising:
a central reinforcer (5) arranged at a central position of the three twisted optical units (1).

3. The photoelectric fast-connection optical cable for the 5G outdoor micro base station according to claim 1, wherein a four-core structure is arranged in a center of each of the optical units (1).

4. The photoelectric fast-connection optical cable for the 5G outdoor micro base station according to claim 3, wherein each of the optical units (1) comprises:
four colored optical fibers;
a dry water-blocking yarn coated outside the colored optical fiber;
a polybutylene terephthalate layer arranged around the dry water-blocking yarn;
an aramid fiber yarn arranged around the polybutylene terephthalate layer; and
a low-smoke zero-halogen flame-retardant outer sheath arranged around the aramid fiber yarn.

5. The photoelectric fast-connection optical cable for the 5G outdoor micro base station according to claim 1, wherein a specification of a corresponding grade of 1.5 mm² to 2.5 mm² is employed for each of the electric units (3), so that the electric unit (3) meets a use power and a use distance of a device.

6. The photoelectric fast-connection optical cable for the 5G outdoor micro base station according to claim 1, wherein each set of electric units (3) comprise a live wire electric unit, a neutral wire electric unit and a ground wire electric unit which are sequentially arranged; and wherein, when laid in branches, each set of electric units (3) are arranged corresponding to one of the optical units (1).

7. A method of using the photoelectric fast-connection optical cable for a 5G outdoor micro base station according to any one of claims 1 to 6, the optical cable comprising a body with an outer diameter smaller than 20 mm, wherein the method comprises:
dividing the optical cable into three optical units (1) and three sets of electric units (3) through a primary branching device (6);
connecting the electric units (3) to a special plug for power supply of an Active Antenna Unit, AAU, device through an insulated polyvinyl chloride hollow pipe for an insulated conductor part of the electric units (3); and
connecting the optical units (1) to the AAU device through two pairs of duplex connectors (7) formed by secondary branching using a spiral armored pipe for the optical units (1).

8. The method of the photoelectric fast-connection optical cable for the 5G outdoor micro base station according to claim 7, wherein each of the duplex connectors (7) has an outer diameter of 7.0 mm to 7.5 mm.

9. The method of the photoelectric fast-connection optical cable for the 5G outdoor micro base station according to claim 7, wherein a voltage protection apparatus is arranged between the electric units (3) and the AAU device.

10. The method of the photoelectric fast-connection optical cable for the 5G outdoor micro base station according to claim 7, wherein:
a temperature-resistant ambient temperature of an accessory assembly of the optical cable is between -40°C and 70°C; and
a protection grade of the accessory assembly of the optical cable meets IP67.
